# EUROPEAN PATENT APPLICATION

(11) **EP 4 851 514 A1**
(43) Date of publication of application: **09.12.2026**
(21) Application number: 25221621.3
(22) Date of filing: 09.12.2025
(51) Int. Cl.: F16L 37/252, F16L 37/373

(54) **FLUID CONNECTOR AND INTERLOCK SYSTEM THEREOF**

(30) Priority: 06.06.2025 US 202563819127 P
(71) Applicant: Auras Technology Co., Ltd., New Taipei City 242 (TW)
(72) Inventor: CHENG, Yi-Le, 242 New Taipei City (TW); YE, Tian-Li, 242 New Taipei City (TW); CHEN, Chien-Yu, 242 New Taipei City (TW)
(74) Representative: Berggren Oy

(57) **Abstract**

A fluid connector includes a main body, a valve assembly, a switch member, and an interlocking mechanism. The main body has a first end and a second end, a fluid passage extending through the main body therebetween, and a docking platform at the first end of the main body. The valve assembly includes a ball core pivotally connected to an interior of the main body and provided with a through hole. The switch member is located on the main body and includes a handle and a positioning assembly, the handle being pivotally connected to the main body and connected to the ball core. The interlocking mechanism includes a ball, a fastener, a first rod, and a second rod. The ball is connected between the fastener and a cam of the switch member, and the fastener passes through the first rod and abuts against the second rod.

## Description

### BACKGROUND

### Field of Disclosure

The present disclosure relates to a fluid connector, and more particularly to a fluid connector with a ball valve structure.

### Description of Related Art

A fluid connector is used in fluid delivery pipeline systems and is mainly employed for quickly connecting or disconnecting two pipeline sections while simultaneously controlling the on/off state of the fluid. In conventional technology, the design of the fluid connector usually focuses on sealing performance and operational convenience, but in practical applications, the following technical defects and limitations still exist.

In the operation process of existing fluid connectors, the valve may be opened before full docking due to accidental or improper operations, thereby causing a risk of fluid leakage. To prevent such accidents, some fluid connectors adopt manual locking mechanisms. However, such mechanisms are cumbersome to operate and are easily affected by user negligence, thus reducing the safety of the system. Furthermore, conventional fluid connectors neglect the problem of accidental separation when the valve is not closed. When the valve is in an open state, fluid leakage or equipment damage may easily occur in case the connector is accidentally separated.

### SUMMARY

The present disclosure provides a fluid connector and interlocking system thereof to deal with the needs of the prior art problems.

In one or more embodiments, a fluid connector includes a main body, a valve assembly, a switch member and an interlocking mechanism. The main body has a first end, a second end, and a fluid passage extending through the main body from the first end to the second end. The first end of the main body has a docking platform. The valve assembly includes a ball core pivotally coupled within the main body, the ball core having a through hole. The switch member is located on the main body and includes a handle and a positioning assembly, the handle is pivotally mounted to the main body and coupled to the ball core. The interlocking mechanism includes a ball, a fastener, a first rod, and a second rod, wherein the ball is disposed between the fastener and a cam of the handle, and the fastener is configured to pass through the first rod and abuts against the second rod.

In one or more embodiments, the first rod has a sliding slot, and the fastener is configured to pass through the sliding slot and slidable to abut against the second rod.

In one or more embodiments, the second rod includes a first outer diameter, a second outer diameter, and a third outer diameter, the first outer diameter is smaller than the second outer diameter, and the second outer diameter is smaller than the third outer diameter.

In one or more embodiments, the cam of the handle has two different radii.

In one or more embodiments, the handle is pivotable between an open position and a closed position relative to the main body.

In one or more embodiments, when the handle is in the open position relative to the main body, the through hole of the ball core is fluidly communicable with the fluid passage of the main body, and when the handle is in the closed position relative to the main body, the through hole of the ball core is not fluidly communicable with the fluid passage of the main body.

In one or more embodiments, the cam of the handle has a relatively large radius and a relatively small radius, and when the handle is in the open position relative to the main body, a distance between a pivot center of the cam and the ball equals the relatively large radius.

In one or more embodiments, the cam of the handle has a relatively large radius and a relatively small radius, and when the handle is in the closed position relative to the main body, a distance between a pivot center of the cam and the ball equals the relatively small radius.

In one or more embodiments, the second rod has three regions of different outer diameters, and when the handle is in the open position relative to the main body, the fastener passes through the first rod and abuts against a region of the second rod having the smallest outer diameter.

In one or more embodiments, the second rod has three regions of different outer diameters, and when the handle is in the closed position relative to the main body, the fastener passes through the first rod and slides to abut against a region of the second rod having the second-smallest outer diameter.

In one or more embodiments, the second rod comprises a first region, a second region, and a third region, the first region having the smallest outer diameter, the second region having the second-smallest outer diameter, and the third region having the largest outer diameter, the first region is positioned between the second region and the third region.

In one or more embodiments, the first rod has restriction grooves of different depths, and when the handle is in the open position relative to the main body, the fastener engages a relatively deep restriction groove of the first rod.

In one or more embodiments, when the handle is in the closed position relative to the main body, the fastener disengages from the relatively deep restriction groove of the first rod.

In one or more embodiments, the first rod includes a relatively shallow restriction groove, a relatively deep restriction groove, and a sliding slot, the relatively shallow restriction groove and the relatively deep restriction groove are connected to form a stepped structure, and the sliding slot extends through a portion of a groove bottom of the relatively deep restriction groove.

In one or more embodiments, the fastener comprises a plate member and a columnar member, the plate member is configured to engage the relatively deep restriction groove, and the columnar member is configured to extend through the sliding slot and slidingly abut against the second rod.

In one or more embodiments, a fluid connector interlocking system include a first fluid connector and a second fluid connector, wherein the docking platform comprises a first-rod slot, a second-rod slot, and a positioning slot, the first-rod slot is configured to accommodate the first rod, the second-rod slot is configured to accommodate the second rod, and when the docking platforms of the first and second fluid connectors are docked and interlocked with each other, the first rod of the first fluid connector protrudes out of the first-rod slot and is inserted into the positioning slot of the second fluid connector. The handle has an open position relative to the main body, and when the handle is in the open position relative to the main body, the through hole of the ball core is fluidly communicable with the fluid passage of the main body.

In one or more embodiments, the cam of the handle has a relatively large radius and a relatively small radius, and a distance between a pivot center of the cam and the ball equals the relatively large radius.

In one or more embodiments, the first rod has restriction grooves of different depths, and the fastener engages a relatively deep restriction groove of the first rod.

In one or more embodiments, the second rod has three regions of different outer diameters, and the fastener passes through the first rod and abuts against a region of the second rod having the smallest outer diameter.

In one or more embodiments, the second rod comprises a first region, a second region, and a third region, the first region having the smallest outer diameter, the second region having the second-smallest outer diameter, and the third region having the largest outer diameter, the first region is positioned between the second region and the third region.

In one or more embodiments, the first rod includes a relatively shallow restriction groove, a relatively deep restriction groove, and a sliding slot, the relatively shallow restriction groove and the relatively deep restriction groove are connected to form a stepped structure, and the sliding slot extends through a portion of a groove bottom of the relatively deep restriction groove.

In one or more embodiments, the fastener comprises a plate member and a columnar member, the plate member is configured to engage the relatively deep restriction groove, and the columnar member is configured to extend through the sliding slot and slidingly abut against the second rod.

In sum, the fluid connector and its interlocking system disclosed herein achieve a docking interlock and malfunction-prevention mechanism of the fluid connector by means of the interrelationship among the valve assembly, the switch member, and the interlocking mechanism.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a perspective view illustrating a fluid connector of the present disclosure in an open state;
Fig. 2 is a perspective view illustrating a fluid connector of Fig. 1 with a portion of the main body removed;
Fig. 3 is a perspective view illustrating the fluid connector of the present disclosure in a closed state;
Fig. 4 is a perspective view illustrating the fluid connector of Fig. 3 with a portion of the body removed;
Fig. 5 is a top view illustrating an interlocking mechanism and a valve assembly of the fluid connector of the present disclosure in an open state;
Fig. 6 is a top view illustrating the interlocking mechanism and the valve assembly of the fluid connector of the present disclosure in a closed state;
Fig. 7 is a perspective view illustrating an interlocking system of the fluid connector of the present disclosure;
Fig. 8 is a sectional view illustrating a positioning assembly of a handle of the fluid connector of the present disclosure;
Fig. 9 is a sectional view illustrating an area surrounding a fastener of the fluid connector of the present disclosure;
Fig. 10 is a diagram illustrating the relationship between the fastener and surrounding components of the fluid connector of the present disclosure; and
Fig. 11 is a top view illustrating a slide rail and a groove on a main body of the fluid connector of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

In the embodiments and the claims, unless the text specifically limits the articles, the terms 'a' and 'the' may refer to a single element or to a plurality of elements.

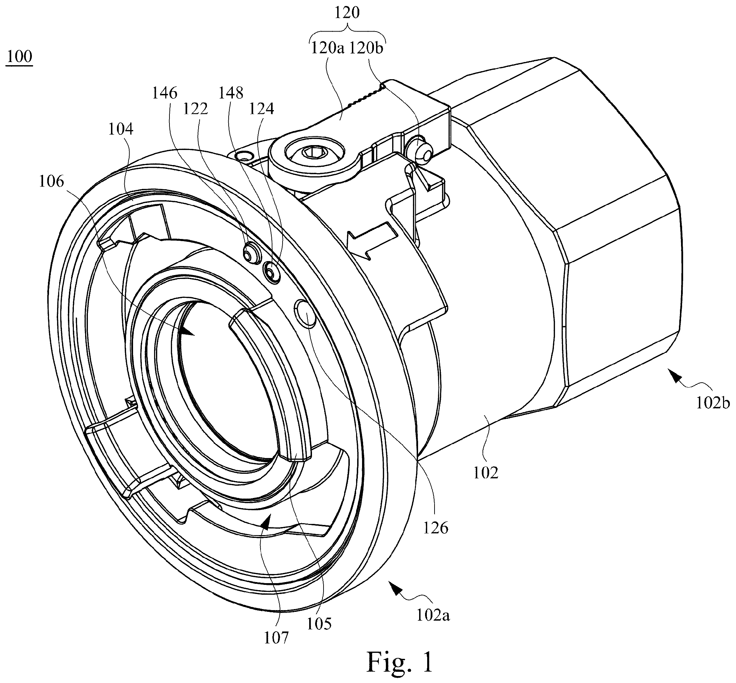

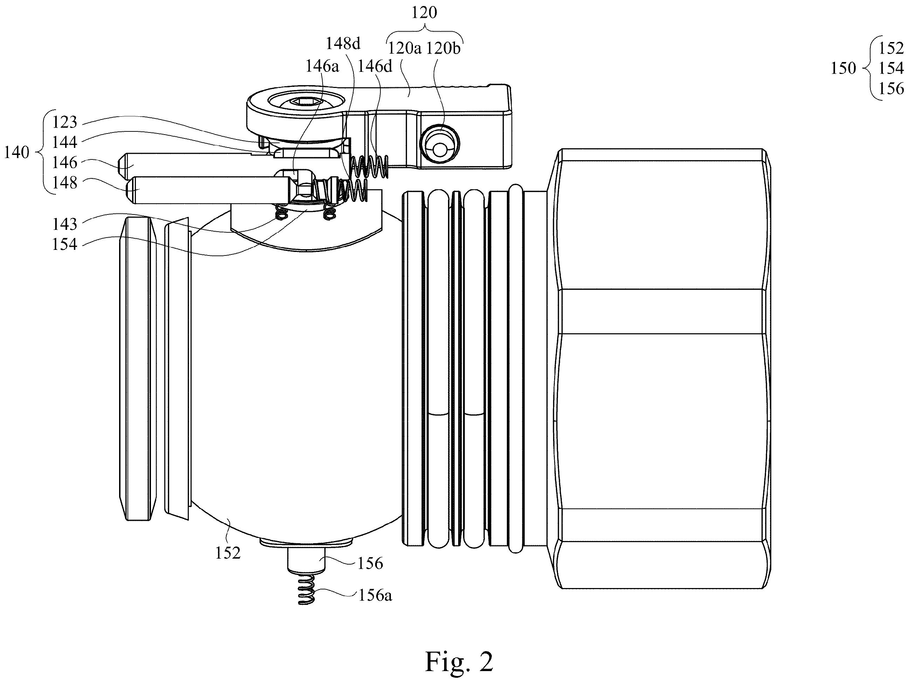

Reference is made to Figs. 1 and 2 simultaneously. Fig. 1 is a perspective view illustrating a fluid connector 100 of the present disclosure in an open state, and Fig. 2 is a perspective view illustrating the fluid connector 100 of Fig. 1 with a portion of the body removed to expose an interlocking mechanism. A main body 102 of the fluid connector 100 has a first end 102a and a second end 102b. A fluid passage 106 extends through the main body 102 from the first end 102a to the second end 102b. The first end 102a of the main body 102 is equipped with a docking platform 104. When the fluid connector 100 is in the open state, the fluid passage 106 allows fluid to flow freely therethrough.

A switch member 120 of the fluid connector 100 is located on the main body 102 and includes a handle 120a and a positioning assembly 120b. The switch member 120 is used to control switching of the fluid connector 100 between the open state and the closed state. When the fluid connector 100 is in the open state, the handle 120a has an open position relative to the main body 102(i.e., a position in which a lengthwise direction of the handle 120a is substantially parallel to a lengthwise direction of the main body 102). The positioning assembly 120b serves for positioning and unlocking positioning of the handle 120a.

A valve assembly 150 of the fluid connector 100 includes a ball core 152, a first pivot member 154, and a second pivot member 156. The ball core 152 is positioned between the first pivot member 154 and the second pivot member 156, and is rotatably pivoted within the main body 102 by means of the pivot members 154 and 156. The first pivot member 154 is interconnected between the ball core 152 and the handle 120a to enable the ball core 152 to rotate synchronously with the handle 120a. Under the biasing force of a spring 156a, the second pivot member 156 enables the ball core 152 to be stably pivoted within the main body 102.

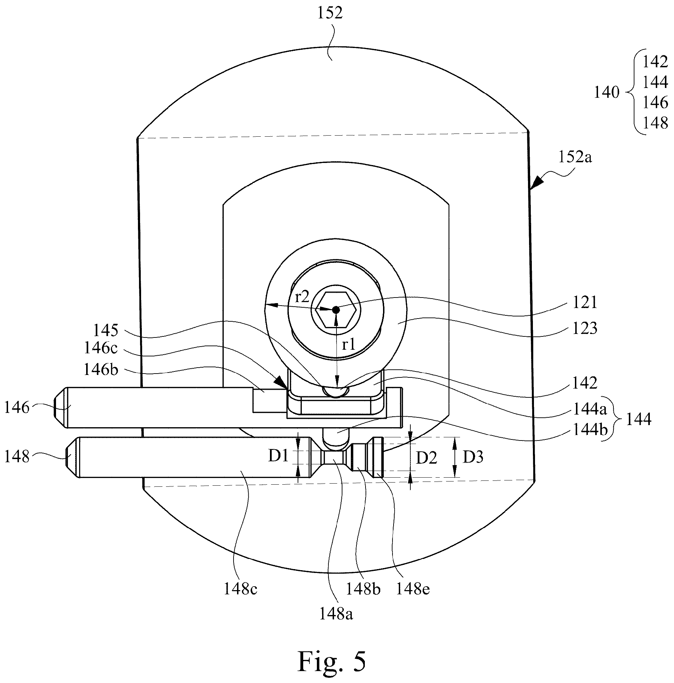

An interlocking mechanism 140 of the fluid connector 100 includes a ball 142 (see Fig. 5), a fastener 144, a first rod 146, and a second rod 148. The ball 142 is rollably connected between the fastener 144 and a cam 123 of the switch member 120. The fastener 144 passes through a sliding slot 146a of the first rod 146 and abuts the second rod 148. The interlocking mechanism 140 serves to control the interlocking operation between two fluid connectors 100 during docking. The fastener 144, by the biasing force of two springs 143, stably maintains the ball 142 rollably connected between the fastener 144 and the cam 123 of the handle 120a, thereby preventing displacement. The cam 123 of the handle 120a is connected to the first pivot member 154; thus, when the handle 120a rotates, the cam 123, the pivot member 154, and the ball core 152 rotate synchronously. The docking platform 104 is equipped with a first-rod slot 122, a second-rod slot 124, and a positioning slot 126. The first rod 146 is accommodated within the first-rod slot 122 and is urged outward by the elastic force of a spring 146d. The second rod 148 is accommodated within the second-rod slot 124 and is urged outward by the elastic force of a spring 148d.

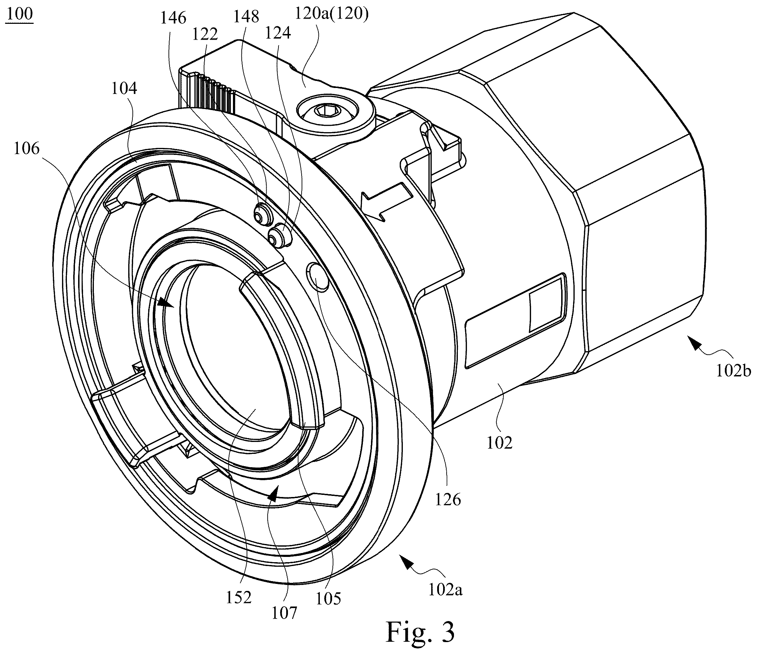

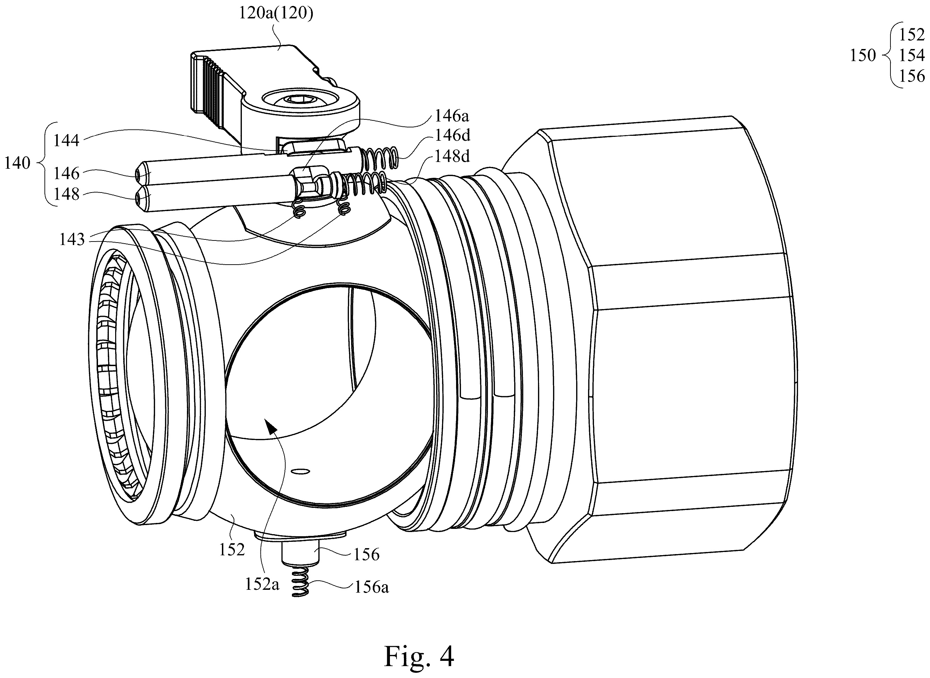

Reference is made to Figs. 3 and 4 simultaneously. Fig. 3 is a perspective view illustrating the fluid connector 100 of the present disclosure in a closed state, and Fig. 4 is a perspective view illustrating the fluid connector 100 of Fig. 3 with a portion of the body removed to expose the interlocking mechanism. When the fluid connector 100 is in the closed state, the fluid passage 106 is blocked by the ball core 152, so that the fluid cannot freely flow through the fluid passage 106. The switch member 120 is used to control switching of the fluid connector 100 between the open state and the closed state. When the fluid connector 100 is in the closed state, the handle 120a has a closed position relative to the main body 102 (i.e., a position in which the lengthwise direction of the handle 120a is substantially perpendicular to the lengthwise direction of the main body 102).

Compared with the open state of the fluid connector 100, when the switch member 120 is rotated to make the lengthwise direction of the handle 120a substantially perpendicular to the lengthwise direction of the main body 102, the valve assembly 150 is controlled to rotate the ball core 152 such that its through hole 152a is not fluidly communicable with the fluid passage 106 of the main body 102, thereby blocking the flow of fluid through the fluid passage 106 and achieving the closed state of the fluid connector 100.

When the fluid connector 100 is in the open state, the through hole 152a of the ball core 152 rotates to a position aligned with the fluid passage 106 (i.e., the through hole 152a is fluidly communicable with the fluid passage 106), thereby allowing the fluid to flow freely through the fluid passage 106.

Reference is made to Fig. 5, which is a top view illustrating the interlocking mechanism and the valve assembly of the fluid connector of the present disclosure in the open state. For the sake of clearly showing the interlocking mechanism 140, the handle 120a has been removed, thereby exposing the cam 123 of the handle 120a and the interlocking mechanism 140. The interlocking mechanism 140 includes the ball 142, the fastener 144, the first rod 146, and the second rod 148, and interacts with the cam 123 of the handle to achieve a docking interlock and a malfunction-prevention mechanism of the fluid connector.

The ball 142 is connected between a recess 145 of the fastener 144 and the cam 123 of the handle 120a. An inner surface of the recess 145 conforms to a spherical shape of the ball 142, allowing the ball 142 to roll smoothly and be rollably connected between the fastener 144 and the cam 123.

The fastener 144 includes a plate member 144a and a columnar member 144b. The columnar member 144b extends from the plate member 144a, and the recess 145 is located on the side of the plate member 144a opposite to the columnar member 144b. The cam 123 has a relatively large radius r1 and a relatively small radius r2, wherein the radius refers to a distance from a pivot center 121 of the cam 123 to an outer edge thereof. The second rod 148 has a first outer diameter D1, a second outer diameter D2, and a third outer diameter D3, wherein the first outer diameter D1 is smaller than the second outer diameter D2, and the second outer diameter D2 is smaller than the third outer diameter D3. A first region 148a of the second rod 148 has the first outer diameter D1, a second region 148b has the second outer diameter D2, a third region 148c has the third outer diameter D3, and a fourth region 148e also has the third outer diameter D3. The first region 148a is connected between the second region 148b and the third region 148c, thereby forming a recessed portion. The second region 148b is connected between the first region 148a and the fourth region 148e, and the second region 148b is a recessed portion relative to the fourth region 148e. The first rod 146 has a relatively shallow restriction groove 146b, a relatively deep restriction groove 146c, and a sliding slot 146a. The restriction grooves 146b and 146c are connected to each other to form a stepped structure. The sliding slot 146a penetrates a portion of the groove bottom of the relatively deep restriction groove 146c.

When the fluid connector 100 is in the open state, because the outer edge of the relatively large radius r1 of the cam 123 abuts the ball 142, the plate member 144a of the fastener 144 is pushed to engage with the relatively deep restriction groove 146c of the first rod 146. The first rod 146 is thereby restricted from sliding. The columnar member 144b of the fastener 144 also passes through the sliding slot 146a and slides to abut against the first region 148a having the smallest first outer diameter D1 of the second rod 148. The second rod 148 is therefore restricted from sliding. Accordingly, both the first rod 146 and the second rod 148 are mutually restricted from sliding.

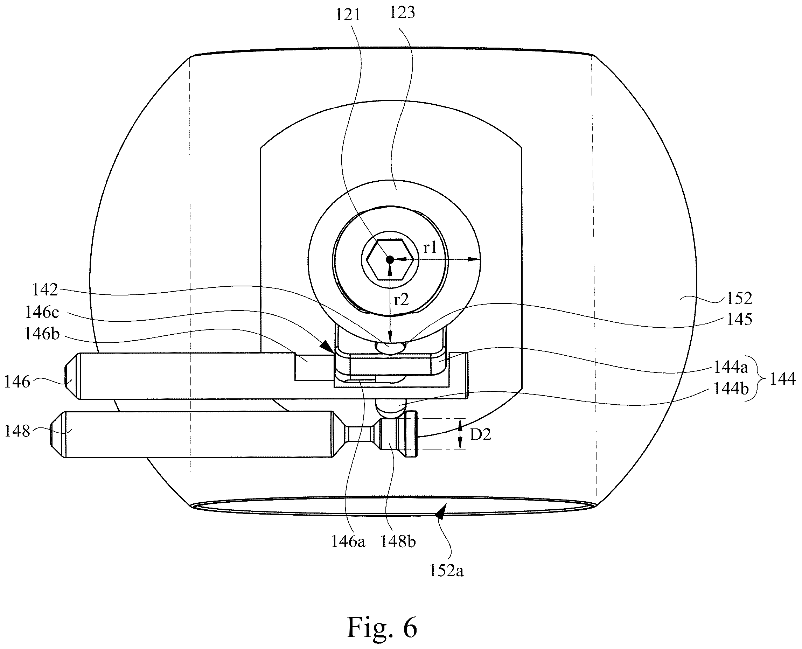

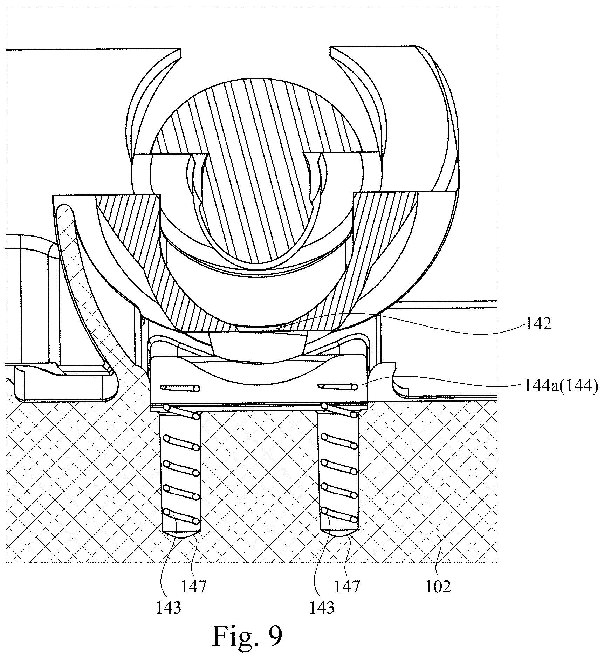

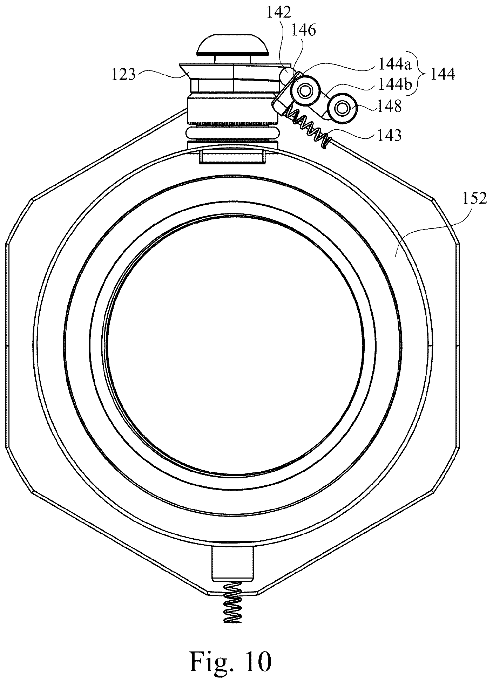

Reference is made to Fig. 6, which is a top view illustrating the interlocking mechanism and the valve assembly of the fluid connector of the present disclosure in the closed state. When the fluid connector 100 is in the closed state, because the outer edge of the relatively small radius r2 of the cam 123 abuts the ball 142, the fastener 144, under the upward thrust of its springs 143 (please also refer to Figs. 9-10), causes the plate member 144a of the fastener 144 to disengage from the relatively deep restriction groove 146c of the first rod 146 and to be slidable within the range of the relatively shallow restriction groove 146b of the first rod 146. The columnar member 144b of the fastener 144 also disengages from the first region 148a having the first outer diameter D1 of the second rod 148, and becomes slidable to abut against the second region 148b having the second outer diameter D2 (i.e., the second-smallest outer diameter) within its range. Therefore, the cam 123 is restricted from rotation by the fastener 144, while the first rod 146 and the second rod 148 are not mutually restricted, and can slide or rotate toward the springs 146d and 148d respectively. When the second rod 148 slides toward the spring 148d such that the first region 148a having the first outer diameter D1 is located directly below (or vertically overlapping) the columnar member 144b of the fastener 144, the columnar member 144b of the fastener 144 has not yet abutted the first region 148a at this time. Thus, the restriction of the fastener 144 on the cam 123 can be released. After the positioning assembly 120b unlocks the handle 120a, the handle 120a can rotate the cam 123 until the outer edge of the relatively large radius r1 of the cam 123 abuts the ball 142 and pushes the columnar member 144b to abut the first region 148a, thereby restoring the fluid connector 100 to the open state shown in Fig. 5.

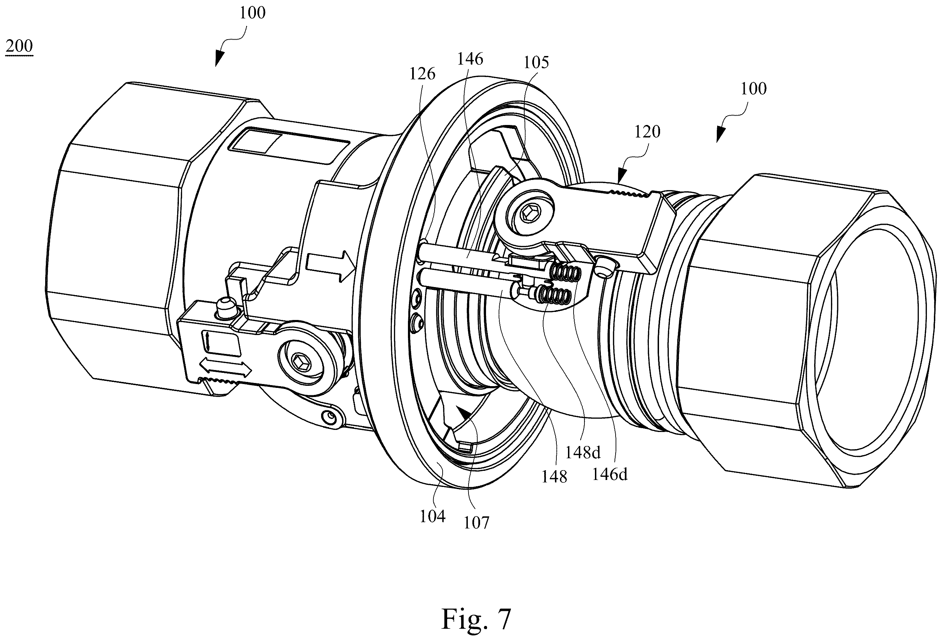

Reference is made to Fig. 7, which is a perspective view illustrating an interlocking system 200 of the fluid connector of the present disclosure. The interlocking system 200 of the fluid connector includes two fluid connectors 100. For the docking and interlocking relationship between the docking platforms 104 of the two fluid connectors 100, a portion of the body of one of the fluid connectors 100 is removed to expose the interlocking mechanism 140. When the docking platforms 104 of the two fluid connectors 100 complete docking and interlocking, the two docking platforms 104 rotate to interlock each other by means of their respective latch tongues 105 and latch grooves 107. Furthermore, the first rod 146 of one of the two fluid connectors 100 protrudes outward from the first-rod slot 122 and is inserted into the positioning slot 126 of the other of the two fluid connectors 100 (also referring to Fig. 1). The second rod 148 is pushed toward the spring 148d by compression from the other fluid connector 100, such that the first region 148a having the smallest outer diameter D1 is located directly below the columnar member 144b of the fastener 144, thereby releasing the restriction of the fastener 144 on the cam 123. Consequently, the cam 123 can rotate until the outer edge of the relatively large radius r1 abuts the ball 142, enabling the fluid connector 100 to switch from the closed state to the open state. In this embodiment, when the two fluid connectors 100 are docked, the second rod 148 is pushed toward the spring 148d by compression from the latch tongue 105 of the other fluid connector 100. However, the present disclosure is not limited thereto and may also be configured such that the second rod 148 is pushed toward the spring 148d by compression from the second rod 148 of the other fluid connector 100.

If the two fluid connectors 100 are in the open state, because both the first rod 146 and the second rod 148 are mutually restricted from sliding or rotating (Reference is made to the foregoing description of the open state of the fluid connector 100 in Fig. 5), and because the first rod 146 is inserted into the positioning slot 126 of the other fluid connector 100, the docking platforms 104 of the two fluid connectors 100 cannot rotate to unlock, thereby preventing fluid leakage during unlocking.

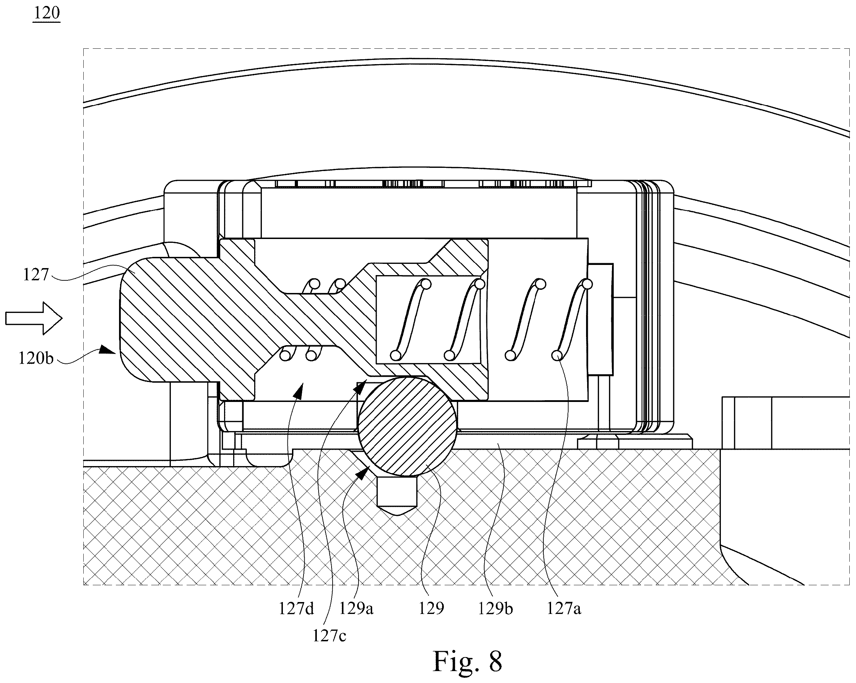

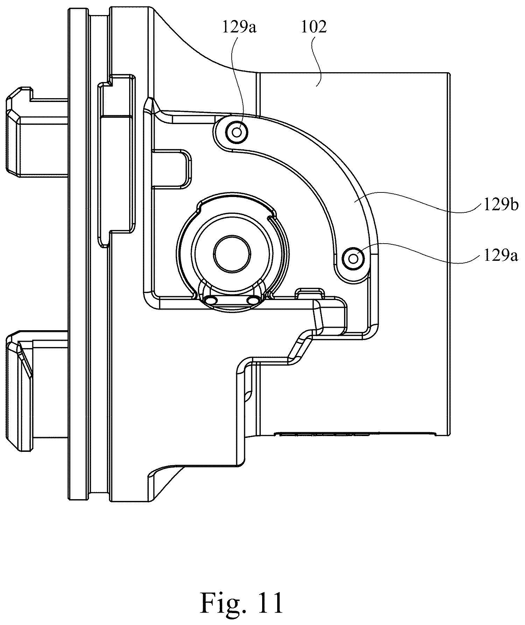

Reference is made to Figs. 8 and 11. Fig. 8 is a sectional view illustrating the positioning assembly 120b of the switch member of the fluid connector of the present disclosure, and Fig. 11 is a top view illustrating a slide rail 129b and a groove 129a formed on the body of the fluid connector of the present disclosure. The positioning assembly 120b is used to lock or unlock the switch member, so that the handle 120a can be positioned or can freely slide. The positioning assembly 120b includes a button rod 127 and a ball 129. The button rod 127 has a receiving groove 127d and a restriction groove 127c, wherein the receiving groove 127d and the restriction groove 127c are continuous recesses on the button rod 127, and the receiving groove 127d is deeper than the restriction groove 127c. The button rod 127 is located inside the handle 120a, and by means of the thrust of a spring 127a, the ball 129 is positioned between the restriction groove 127c of the button rod 127 and the groove 129a of the slide rail 129b, causing the handle 120a to be non-rotatable. The groove 129a is a depression on the slide rail 129b and used for positioning the ball 129. When the button rod 127 is pressed in the direction indicated by the arrow in the figure such that the receiving groove 127d of the button rod 127 is aligned with the ball 129, the ball 129 is allowed to roll, the handle 120a can rotate, and the ball 129 can roll on the slide rail 129b. The handle 120a can thereby rotate relative to the main body 102 to the open position (see Fig. 1) or the closed position (see Fig. 3).

Reference is made to Fig. 9, which is a sectional view illustrating the surroundings of the fastener 144 of the fluid connector 100 of the present disclosure. This sectional view reveals the fastener 144, the springs 143, and their spring grooves 147. Two spring grooves 147 are located inside the main body 102 and accommodate the two springs 143 respectively. The two springs 143 are connected to the plate member 144a of the fastener 144 and provide thrust to press the plate member 144a to abut against the ball 142, thereby preventing displacement of the ball 142.

The fluid connector and its interlocking system disclosed herein achieve a docking interlock and malfunction-prevention mechanism of the fluid connector by means of the interrelationship among the valve assembly, the switch member, and the interlocking mechanism.

## Claims

1. A fluid connector(100), comprising:
a main body(102) having a first end(102a), a second end(102b), and a fluid passage(106) extending through the main body(102) from the first end(102a) to the second end(102b), the first end(102a) of the main body(102) having a docking platform(104);
a valve assembly(150) including a ball core(152) pivotally coupled within the main body(102), the ball core(152) having a through hole(152a);
a switch member(120) disposed on the main body(102) and comprising a handle(120a) and a positioning assembly(120b), the handle(120a) being pivotally mounted to the main body(102) and coupled to the ball core(152); and
an interlocking mechanism(140) comprising a ball(142), a fastener(144), a first rod(146), and a second rod(148), wherein the ball(142) is disposed between the fastener(144) and a cam(123) of the handle(120a), and the fastener(144) is configured to pass through the first rod(146) and abuts against the second rod(148).

2. The fluid connector(100) of claim 1, wherein the first rod(146) has a sliding slot(146a), and the fastener(144) is configured to pass through the sliding slot(146a) and slidable to abut against the second rod(148).

3. The fluid connector(100) of claim 1, wherein the second rod(148) includes a first outer diameter(D1), a second outer diameter(D2), and a third outer diameter(D3), the first outer diameter(D1) is smaller than the second outer diameter(D2), and the second outer diameter(D2) is smaller than the third outer diameter(D3).

4. The fluid connector(100) of claim 1, wherein the cam(123) of the handle(120a) has two different radii.

5. The fluid connector(100) of claim 1, wherein the handle(120a) is pivotable between an open position and a closed position relative to the main body(102).

6. The fluid connector(100) of claim 5, wherein when the handle(120a) is in the open position relative to the main body(102), the through hole(152a) of the ball core(152) is fluidly communicable with the fluid passage(106) of the main body(102), and when the handle(120a) is in the closed position relative to the main body(102), the through hole(152a) of the ball core(152) is not fluidly communicable with the fluid passage(106) of the main body(102).

7. The fluid connector(100) of claim 5, wherein the cam(123) of the handle(120a) has a relatively large radius(r1) and a relatively small radius(r2), and when the handle(120a) is in the open position relative to the main body(102), a distance between a pivot center of the cam(123) and the ball(142) equals the relatively large radius(r1).

8. The fluid connector(100) of claim 5, wherein the cam(123) of the handle(120a) has a relatively large radius(r1) and a relatively small radius(r2), and when the handle(120a) is in the closed position relative to the main body(102), a distance between a pivot center of the cam(123) and the ball(142) equals the relatively small radius(r2).

9. The fluid connector(100) of claim 5, wherein the second rod(148) has three regions of different outer diameters, and when the handle(120a) is in the open position relative to the main body(102), the fastener(144) passes through the first rod(146) and abuts against a region of the second rod(148) having the smallest outer diameter.

10. The fluid connector(100) of claim 5, wherein the second rod(148) has three regions of different outer diameters, and when the handle(120a) is in the closed position relative to the main body(102), the fastener(144) passes through the first rod(146) and slides to abut against a region of the second rod(148) having the second-smallest outer diameter.

11. The fluid connector(100) of claim 9, wherein the second rod(148) comprises a first region(148a), a second region(148b), and a third region(148c), the first region(148a) having the smallest outer diameter, the second region(148b) having the second-smallest outer diameter, and the third region(148c) having the largest outer diameter, the first region(148a) is positioned between the second region(148b) and the third region(148c).

12. The fluid connector(100) of claim 5, wherein the first rod(146) has restriction grooves of different depths, and when the handle(120a) is in the open position relative to the main body(102), the fastener(144) engages a relatively deep restriction groove(146c) of the first rod(146).

13. The fluid connector(100) of claim 12, wherein when the handle(120a) is in the closed position relative to the main body(102), the fastener(144) disengages from the relatively deep restriction groove(146c) of the first rod(146).

14. The fluid connector(100) of claim 12, wherein the first rod(146) includes a relatively shallow restriction groove(146b), the relatively deep restriction groove(146c), and a sliding slot(146a), the relatively shallow restriction groove(146b) and the relatively deep restriction groove(146c) are connected to form a stepped structure, and the sliding slot(146a) extends through a portion of a groove bottom of the relatively deep restriction groove(146c).

15. The fluid connector(100) of claim 14, wherein the fastener(144) comprises a plate member(144a) and a columnar member(144b), the plate member(144a) is configured to engage the relatively deep restriction groove(146c), and the columnar member(144b) is configured to extend through the sliding slot(146a) and slidingly abut against the second rod(148).

16. A fluid connector interlocking system (200) comprising:
a first fluid connector(100) and a second fluid connector(100) of the fluid connector(100) of any one of claims 1-15, wherein the docking platform(104) comprises a first-rod slot(122), a second-rod slot(124), and a positioning slot(126), the first-rod slot(122) is configured to accommodate the first rod(146), the second-rod slot(124) is configured to accommodate the second rod(148), and when the docking platforms(104) of the first and second fluid connectors(100) are docked and interlocked with each other, the first rod(146) of the first fluid connector(100) protrudes out of the first-rod slot(122) and is inserted into the positioning slot(126) of the second fluid connector(100);
wherein the handle(120a) has an open position relative to the main body(102), and when the handle(120a) is in the open position relative to the main body(102), the through hole(152a) of the ball core(152) is fluidly communicable with the fluid passage(106) of the main body(102).

## Amended claims

### Amended claims in accordance with Rule 137(2) EPC.

1. A fluid connector (100), comprising:
a main body (102) having a first end (102a), a second end (102b), and a fluid passage (106) extending through the main body (102) from the first end (102a) to the second end (102b), the first end (102a) of the main body (102) having a docking platform (104);
a valve assembly (150) including a ball core (152) pivotally coupled within the main body (102), the ball core (152) having a through hole (152a);
a switch member (120) disposed on the main body (102) and comprising a handle (120a) and a positioning assembly (120b), the handle (120a) being pivotally mounted to the main body (102) and coupled to the ball core (152); and
an interlocking mechanism (140) comprising a ball (142), a fastener (144), a first rod (146), and a second rod (148), **characterised in that** the ball (142) is disposed between the fastener (144) and a cam (123) of the handle (120a), and the fastener (144) is configured to pass through the first rod (146) and abuts against the second rod (148).

2. The fluid connector (100) of claim 1, wherein the first rod (146) has a sliding slot (146a), and the fastener (144) is configured to pass through the sliding slot (146a) and slidable to abut against the second rod (148).

3. The fluid connector (100) of claim 1, wherein the second rod (148) includes a first outer diameter (D1), a second outer diameter (D2), and a third outer diameter (D3), the first outer diameter (D1) is smaller than the second outer diameter (D2), and the second outer diameter (D2) is smaller than the third outer diameter (D3).

4. The fluid connector (100) of claim 1, wherein the cam (123) of the handle (120a) has two different radii.

5. The fluid connector (100) of claim 1, wherein the handle (120a) is pivotable between an open position and a closed position relative to the main body (102).

6. The fluid connector (100) of claim 5, wherein when the handle (120a) is in the open position relative to the main body (102), the through hole (152a) of the ball core (152) is fluidly communicable with the fluid passage (106) of the main body (102), and when the handle (120a) is in the closed position relative to the main body (102), the through hole (152a) of the ball core (152) is not fluidly communicable with the fluid passage (106) of the main body (102).

7. The fluid connector (100) of claim 5, wherein the cam (123) of the handle (120a) has a relatively large radius (r1) and a relatively small radius (r2), and when the handle (120a) is in the open position relative to the main body (102), a distance between a pivot center of the cam (123) and the ball (142) equals the relatively large radius (r1).

8. The fluid connector (100) of claim 5, wherein the cam (123) of the handle (120a) has a relatively large radius (r1) and a relatively small radius (r2), and when the handle (120a) is in the closed position relative to the main body (102), a distance between a pivot center of the cam (123) and the ball (142) equals the relatively small radius (r2).

9. The fluid connector (100) of claim 5, wherein the second rod (148) has three regions of different outer diameters, and when the handle (120a) is in the open position relative to the main body (102), the fastener (144) passes through the first rod (146) and abuts against a region of the second rod (148) having the smallest outer diameter.

10. The fluid connector (100) of claim 5, wherein the second rod (148) has three regions of different outer diameters, and when the handle (120a) is in the closed position relative to the main body (102), the fastener (144) passes through the first rod (146) and slides to abut against a region of the second rod (148) having the second-smallest outer diameter.

11. The fluid connector (100) of claim 9, wherein the second rod (148) comprises a first region (148a), a second region (148b), and a third region (148c), the first region (148a) having the smallest outer diameter, the second region (148b) having the second-smallest outer diameter, and the third region (148c) having the largest outer diameter, the first region (148a) is positioned between the second region (148b) and the third region (148c).

12. The fluid connector (100) of claim 5, wherein the first rod (146) has restriction grooves of different depths, and when the handle (120a) is in the open position relative to the main body (102), the fastener (144) engages a relatively deep restriction groove (146c) of the first rod (146).

13. The fluid connector (100) of claim 12, wherein when the handle (120a) is in the closed position relative to the main body (102), the fastener (144) disengages from the relatively deep restriction groove (146c) of the first rod (146).

14. The fluid connector (100) of claim 12, wherein the first rod (146) includes a relatively shallow restriction groove (146b), the relatively deep restriction groove (146c), and a sliding slot (146a), the relatively shallow restriction groove (146b) and the relatively deep restriction groove (146c) are connected to form a stepped structure, and the sliding slot (146a) extends through a portion of a groove bottom of the relatively deep restriction groove (146c).

15. The fluid connector (100) of claim 14, wherein the fastener (144) comprises a plate member (144a) and a columnar member (144b), the plate member (144a) is configured to engage the relatively deep restriction groove (146c), and the columnar member (144b) is configured to extend through the sliding slot (146a) and slidingly abut against the second rod (148).

16. A fluid connector interlocking system (200) comprising:
a first fluid connector (100) according to any one of claims 1-15 and a second fluid connector (100) according to any one of claims 1-15, wherein the docking platform (104) of each fluid connector (100) comprises a first-rod slot (122), a second-rod slot (124), and a positioning slot (126), the first-rod slot (122) being configured to accommodate the first rod (146) of the same fluid connector, the second-rod slot (124) being configured to accommodate the second rod (148) of the same fluid connector (100), and with the docking platforms (104) of the first and second fluid connectors (100) being docked and interlocked with each other, the first rod (146) of the first fluid connector (100) protrudes out of the first-rod slot (122) of the first fluid connector (100) and is inserted into the positioning slot (126) of the second fluid connector (100);
wherein the handle (120a) of each fluid connector (100) has an open position relative to the respective main body (102), and with the handle (120a) of each fluid connector (100) being in the open position relative to the respective main body (102), the through hole (152a) of the respective ball core (152) is fluidly communicable with the fluid passage (106) of the respective main body (102).
